(19) **Europäisches Patentamt**

**European Patent Office**

**Office européen des brevets**

(11) Veröffentlichungsnummer: **0 257 233 B1**

(12) **EUROPÄISCHE PATENTSCHRIFT**

(45) Veröffentlichungstag der Patentschrift: **18.03.92**

(51) Int. Cl.⁵: **B29C 47/16**

(21) Anmeldenummer: **87109106.2**

(22) Anmeldetag: **24.06.87**

(54) **Breitschlitzdüse zum Extrudieren von Thermoplasten.**

(30) Priorität: **26.08.86 DE 3628974**

(43) Veröffentlichungstag der Anmeldung:
**02.03.88 Patentblatt 88/09**

(45) Bekanntmachung des Hinweises auf die
Patenterteilung:
**18.03.92 Patentblatt 92/12**

(84) Benannte Vertragsstaaten:
**AT BE CH ES FR GB GR IT LI LU NL SE**

(56) Entgegenhaltungen:
**DE-A- 2 631 099      DE-A- 3 503 721
DE-C- 695 381       DE-C- 731 468
DE-C- 809 289       FR-A- 2 274 432
GB-A- 2 162 119     US-A- 2 387 718
US-A- 2 938 231     US-A- 3 940 221
US-A- 4 003 689     US-A- 4 201 534
US-A- 4 382 766**

(73) Patentinhaber: **ER-WE-PA Maschinenfabrik
GmbH
Mettmanner Strasse 49/51
W-4006 Erkrath(DE)**

(72) Erfinder: **Schümichen, Uwe, Dipl.-Ing.
Lenaustrasse 34
W-4006 Erkrath(DE)**
Erfinder: **Djordjevic, Dragan, Dipl.-Ing.
Am Korresberg 24
W-4006 Erkrath(DE)**

(74) Vertreter: **Kiefer, Winfried, Dipl.-Phys.
Klöckner-Werke Aktiengesellschaft Patentabteilung Klöcknerstrasse 29
W-4100 Duisburg 1(DE)**

## Beschreibung

Die Erfindung betrifft eine Breitschlitzdüse zum Extrudieren von Thermoplasten mit zwei, mindestens einen Düsenspalt begrenzenden Düsenkörpern, wobei mindestens der eine Düsenkörper eine flexible Lippe und mindestens einen mit einem Heizelement versehenen Heiz-Kühl-Block aufweist, der mit der flexiblen Lippe eine kraftschlüssige Verbindung ausbildet und dessen Längenänderungen die Stellung der flexiblen Lippe steuern und/oder regeln.

Breitschlitzdüsen dienen zum Herstellen von Folienbahnen bis zu dicken Platten.

Die Thermoplaste, beispielsweise granulierte Polyolefine, werden bei Arbeitstemperaturen von 200 bis 320 ° aufgeschmolzen und extrudiert. In Transportrichtung der Folienbahnen ist ein Dickenmeßgerät angeordnet, das im allgemeinen entweder nach dem Reflexionsprinzip mit Ultrarot oder nach dem Transmissionsprinzip mit radioaktiver Strahlung arbeitet und laufend die Dicke quer zur Transportrichtung mißt. Mit diesen Meßwerten wird mittels eines Rechners die vorgegebene Spaltweite geregelt.

Breitschlitzdüsen mit steuer- und regelbaren Düsenlippen sind bereits seit langem bekannt (US-PS 3 940 221). Der eine Düsenkörper weist eine starre Lippe auf, während der andere Düsenkörper eine flexible Lippe hat und eine Ausnehmung unter Ausbildung von zwei Schultern aufweist, zwischen denen der Heiz-Kühl-Block eingesetzt ist. Der Heiz-Kühl-Block weist eine durchgehende Bohrung auf, die mit der glatten Bohrung der der flexiblen Lippe benachbarten Schulter und mit einer ein Innengewinde aufweisenden Bohrung der anderen Schulter fluchtet. In diesen fluchtenden Bohrungen ist der Metallstab angeordnet, der durch die der flexiblen Lippe benachbarten Schulter hindurchgeführt ist und mit seiner Stirnfläche gegen die flexible Lippe ansteht. Der Metallstab weist im Bereich der anderen Schulter einen Gewindeabschnitt auf, über den er mit dem Innengewinde der anderen Schulter eine kraftschlüssige Verbindung ausbildet, wobei die letztgenannte Schulter zugleich als Anschlagfläche für den Kopf des Metallstabes dient. Der Heiz-Kühl-Block weist eine Heizpatrone und weiterhin einen von einem gasförmigen Medium durchströmten Kühlkanal auf. Der Metallstab führt unter dem Einfluß der von dem Heizelement abgestrahlten Wärme bzw. durch das Abkühlen des Heiz-Kühl-Blocks durch das den Kühlkanal durchströmende Medium Längenänderungen aus, die zur Folge haben, daß die flexible Lippe Schwenkbewegungen ausführt, die die Weite des Düsenspaltes ändern. Da der Metallstab nur unter Druck gegen die flexible Lippe arbeitet, ist der Verstellbereich sehr klein, da er durch die Längenänderungen des Stabes begrenzt ist.

Prinzipiell wird durch das Verspannen des Metallstabes in der einen Schulter die Grundeinstellung für die Weite des Düsenspaltes vorgegeben, und zwar in der Weise, daß anschließend der gesamte Bereich der zu regelnden bzw. zu steuernden Dicke der Folien erfaßt ist. Da die Längenänderungen des Metallstabes Bruchteile eines Millimeters betragen, kann eine Dickenregelung nur in einem engen Bereich erfolgen, so daß aufwendige Umrüstzeiten erforderlich sind, wenn die Produktion auf erheblich dickere bzw. dünnere Folien umgestellt wird.

Es sind weiterhin Breitschlitzdüsen bekannt, deren beide Düsenkörper jeweils eine flexible Lippe aufweisen (DE-PS 34 27 912). Der eine Düsenkörper weist eine Bohrung zur Aufnahme eines gegen die flexible Lippe anstehenden Stößels auf, der mittels eines Exzenterstelltriebes betätigbar ist. Dieser Stößel dient zur Grobeinstellung der Weite des Düsenspaltes. Zur Feineinstellung des Düsenspaltes weist der andere Düsenkörper einen Feldtranslator, z.B. einen Piezotranslator auf, der gegen die flexible Lippe seines Düsenkörpers ansteht und in Abhängigkeit der Änderung einer angelegten Spannung Längenänderungen durchführt und somit die flexible Lippe verstellt. Die Ausgangssignale der Dickenmeßvorrichtung dienen als Steuersignale für die an dem Translator angelegte Spannung. Es erfolgt somit eine vollständige Trennung zwischen einer Feineinstellung und Grobeinstellung, ohne daß Gewindebolzen und dgl. zum Einsatz kommen, die gemäß der Lehre dieses Patentes keine toleranzfreie Einstellung zulassen, die angeblich die Voraussetzung für eine exakte Steuerung der Weite des Düsenspaltes ist. Falls beim Extrudieren von Folienbahnen eine Änderung der Grundeinstellung erforderlich ist, erfordert es erhebliche Erfahrung und Fingerspitzengefühl für das Bedienungspersonal, die Grobeinstellung und Feineinstellung so aufeinander abzustimmen, daß anschließend die Feineinstellung den zu regelnden (steuernden) Bereich der Spaltbreite überdeckt.

Entsprechende Erfahrung und Fingerspitzengefühl bei der AbStimmung von Grob- und Feineinstellung der Spaltbreite einer aus zwei Düsenkörpern mit je einer flexiblen Lippe gebildeten Breitschlitzdüse waren bereits bei einer gemäß der US-PS 2 387 718 bekannten Vorrichtung vonnöten, bei der jeder Düsenkörper mindestens eine Bohrung zur Aufnahme einer Differentialschraube aufweist, deren der jeweiligen flexiblen Lippe zugewandtes Ende in einen auf der Rückseite der jeweiligen Lippe befindlichen Schlitz mit T-förmigem Querschnitt eingreift. Mittels der jeweiligen Differentialschraube können auf die jeweils zugehörige Lippe sowohl Druck- als auch Zugkräfte ausgeübt und damit ein ausreichend großer Regelbereich der Spaltbreite überstrichen werden, wobei über ein äußeres Grobgewinde zwischen einer in die Bohrung eingesetzten, gegen Axialverschiebungen gesicherten Hülse und dem äußeren hülsenförmigen Teil der Differentialschraube eine Grobeinstellung und über ein Feingewinde zwischen dem äußeren hülsenförmigen Teil und dem inneren schraubenförmigen Teil der Differentialschraube eine Feineinstellung der Spaltbreite erzeugt wird. Bei Verwendung dieser Anordnung ist jedoch insbesondere im Übergangsbereich zwischen Zug- und Druckbeaufschlagung einer Lippe neben dem obengenannten Erfordernis an Erfahrung und Fingerspitzengefühl zu berücksichtigen, daß eine solche Anordnung nicht spielfrei und damit nicht eindeutig eingestellt werden kann, da die der Zug- bzw. Druckbeaufschlagung einer Lippe entsprechenden Reaktionskräfte direkt von den vorgenannten Gewinden aufgenommen werden müssen, derartige Gewinde aber zwangsläufig eine Toleranz aufweisen.

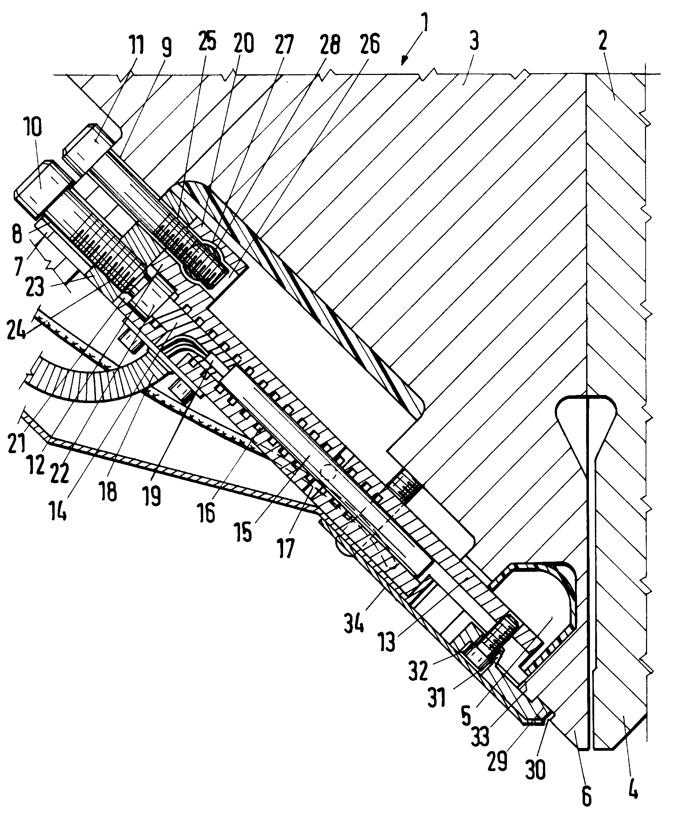

Die letztgenannten Schwierigkeiten wurden auch nicht durch eine Düsenanordnung gemäß der DE-OS 35 03 721, Figur 7 i. V. m. dem zugehörigen Beschreibungsteil auf den S. 26 ab Zeile 22, S. 27 sowie S. 28 beseitigt. Diese Düsenanordnung stellt eine Weiterentwicklung des Gegenstandes der oben genannten US-PS 3 940 221 in der Form dar, daß das der zu verstellenden Düsenlippe zugewandte Ende des als Düsen- oder Stellbolzen dienenden Metallstabes mit dieser Düsenlippe mittels eines Stellhakens eine kraftschlüssige Verbindung ausbildet, so daß der Metallstab bei entsprechenden thermischen Änderungen seiner Länge sowohl Druck- als auch Zugkräfte auf die Düsenlippe übertragen kann, was den Regelbereich der Stellung der Düsenlippe gegenüber dem Gegenstand der vorgenannten US-PS 3 940 221 merklich erweitert. Außerdem wurde im vorliegenden Fall das ursprünglich einfache Gewinde an dem der Düsenlippe abgewandten Ende des Metallstabes durch eine Differentialstellschraube zur ortsfesten Lagerung dieses Endes am zugehörigen Düsenkörper ersetzt. Damit konnte zwar die Genauigkeit der Grobeinstellung verbessert werden, die Kraftaufnahme durch die nicht toleranzfreien Gewinde blieb jedoch bestehen - zumal der Stellhaken mittels eines zusätzlichen Gewindes an dem der Düsenlippe zugewandten Ende des Metallstabes arretiert war.

Mit den vorstehend beschriebenen Justiereinrichtungen für Breitschlitzdüsen ist eine Grobeinstellung der Spaltbreite solcher Düsen entweder nur mit erheblichem Aufwand oder nicht spielfrei und eine Feineinstellung nur über einen - auch im letztgenannten Fall der DE-OS 35 03 721 - verhältnismäßig schmalen Regelbereich oder ebenfalls nicht spielfrei durchführbar, wobei ein schmaler Regelbereich der Feineinstellung jedoch nur dann akzeptiert werden kann, wenn die Grobeinstellung zuvor mit ausreichender Präzision vorgenommen worden ist.

Ausgehend vom Gegenstand der DE-OS 35 03 721, Figur 7 liegt der Erfindung daher die Aufgabe zugrunde eine Breitschlitzdüse der eingangs erwähnten Art zu schaffen, die ein einfacheres Grob- und Feineinstellen ermöglicht.

Diese Aufgabe wird erfindungsgemäß dadurch gelöst, daß der Düsenkörper der verstellbaren Lippe zwei glatte Bohrungen für jeweils einen Gewindebolzen aufweist, zwischen dem Düsenkörper der verstellbaren Lippe und dem Heiz-Kühl-Block ein Anschlagstück angeordnet ist, beide Gewindebolzen durch das Anschlagstück hindurchgeführt sind, der eine Gewindebolzen kraftschlüssig mit dem Anschlagstück verbunden ist und gegen den Heiz-Kühl-Block ansteht und der andere Gewindebolzen sich mit seinem Bolzenkopf am Düsenkörper abstützt und kraftschlüssig mit dem Heiz-Kühl-Block verbunden ist.

Durch diese Maßnahmen wird erreicht, daß der Heiz-Kühl-Block über das Zug-Druckelement spielfrei und kraftschlüssig mit der verstellbaren Lippe verbunden ist und die verstellbare Lippe mit Druck und Zug verstellbar ist.

Es zeigte sich überraschenderweise, daß eine spielfreie Einstellung sichergestellt ist. Die Grobeinstellung der Weite des Düsenspaltes erfolgt durch Betätigen der beiden Gewindebolzen, die Feineinstellung durch den Heiz-Kühl-Block.

Erfindungsgemäß ist der Heiz-Kühl-Block über ein Druck- und Zugelement kraftschlüssig und dabei spielfrei mit der flexiblen Lippe verbunden.

In einer noch weiteren Ausgestaltung der Erfindung ist das Druck- und Zugelement mit dem Heiz-Kühl-Block über mindestens eine Keilfläche verbunden.

In einer noch weiteren Ausgestaltung der Erfindung weist der Heiz-Kühl-Block für den anderen Gewindebolzen eine glatte Bohrung auf, die eine senkrecht zu ihrer Achse verlaufende Querbohrung achsenschneidend durchstößt, wobei in letzterer ein Drehkörper mit einer Gewindebohrung angeordnet ist, die mit dem anderen Gewindebolzen eine kraftschlüssige Verbindung ausbildet. Durch diese Maßnahme ist sichergestellt, daß während der Grundeinstellung der Spaltweite eine spielfreie Einstellung und zusätzlich ein blockierfreies feinfühliges Verdrehen der beiden Gewindebolzen sichergestellt ist.

Die Erfindung ist in der Zeichnung anhand eines Ausführungsbeispieles erläutert:
Sie zeigt einen Schnitt durch die Breitschlitzdüse senkrecht zur Transportrichtung und zur Ebene der Folienbahnen (nicht dargestellt).

Mit 1 ist die Breitschlitzdüse bezeichnet, die die beiden Düsenkörper 2 und 3 aufweist. Der Düsenkörper 2 weist eine starre, d.h. nicht flexible Lippe 4 auf, während an dem Düsenkörper 3 aufgrund der Ausnehmung 5 die flexible Lippe 6 verstellbar ist.

Der Düsenkörper 3 weist einen Ansatz 7 mit den beiden glatten Bohrungen 8 und 9 auf, durch die die Gewindebolzen 10 bzw. 11 hindurchgeführt sind.

Der Heiz-Kühl-Block ist mit 12 bezeichnet und weist in dem in der Figur dargestellten Schnitt einen L-förmigen Querschnitt auf, dessen in Richtung zur flexiblen Lippe zeigender Schenkel 13 eine Bohrung 14 aufweist, in die die Heizpatrone 15 eingesetzt ist. Zwischen dieser Bohrung und der Heizpatrone ist ein wendelförmiger Ringkanal 16 ausgebildet, durch den ein gasförmiges Medium als Kühlmedium hindurchgeführt ist, das aus dem Heiz-Kühl-Block durch die Querbohrung 17 austritt.

Mit 18 ist die Zuleitung mit dem elektrischen Anschluß 19 für die Heizpatrone bezeichnet.

Der kurze, mit 20 bezeichnete Schenkel des Heiz-Kühl-Blockes weist einen Bohrungsabschnitt 21 auf, der koaxial zu der Bohrung für die Heizpatrone angeordnet ist und einen größeren Durchmesser aufweist.

In diesem Bohrungsabschnitt 21 ist das Druckstück 22 eingesetzt, gegen das der Gewindebolzen 10 mit seiner Stirnfläche ansteht.

Zwischen dem Ansatz 7 und dem kurzen Schenkel 20 des Heiz-Kühl-Blockes ist ein Anschlagstück 23 angeordnet, durch das die beiden Gewindebolzen 10 und 11 hindurchgeführt sind.

Der Gewindebolzen 10 ist durch die zugeordnete Gewindebohrung 24 dieses Anschlagstückes hindurchgeführt, der Gewindebolzen 11 ist durch die zugeordnete glatte Bohrung 25 dieses Anschlagstückes hindurchgeführt. Der kurze Schenkel 20 weist eine glatte Bohrung 26 auf, die mit der Achse des Gewindebolzens 11 und den ihm zugeordneten Bohrungen 9 und 25 fluchtet.

Der kurze Schenkel 20 weist im Bereich der glatten Bohrung 26 eine Querbohrung 27 auf, deren Achse senkrecht zur Achse des Gewindebolzens verläuft und die Achse der Bohrung 26 schneidet.

In dieser Querbohrung 27 ist ein Drehkörper 28 angeordnet, der eine Gewindebohrung aufweist, die mit dem Gewinde des Gewindebolzens 11 kraftschlüssig verbunden ist.

Dieser schwenkbare Drehkörper stellt sicher, daß eine bewegungsfreie feinfühlige Einstellung der Weite des Düsenspaltes beim gleichzeitigen Verdrehen der beiden Gewindebolzen ohne Verkanten erfolgt.

Mit 29 ist ein Druck- und Zugelement bezeichnet, das in die Nut 30 der flexiblen Lippe eingreift und das an dem Heiz-Kühl-Block mit der Keilfläche 31 anliegt und mit ihm durch die Schraube 32 kraftschlüssig verbunden ist. Der Heiz-Kühl-Block steht mit seiner Stirnfläche 33 gegen die flexible Lippe an. Aufgrund der Keilfläche wird die flexible Lippe zwischen dem Druck- und Zugelement und der Stirnfläche 33 spielfrei verspannt. Mit 34 ist die Verkleidung der Düse bezeichnet, die zugleich das Leitblech für das aus dem Heiz-Kühl-Block austretende Kühlmedium ist.

Erfindungsgemäß ist ein spielfreies manuelles Grobverstellen der Weite des Düsenspaltes durch Betätigen der beiden Gewindebolzen 10 und 11 und ein spielfreies Feinverstellen der Weite des Düsenspaltes mittels der Heizpatrone sichergestellt.

**Patentansprüche**

1. Breitschlitzdüse (1) zum Extrudieren von Thermoplasten mit zwei, mindestens einen Düsenspalt begrenzenden Düsenkörpern (2,3), wobei mindestens der eine Düsenkörper (3) eine flexible Lippe (6) und mindestens einen mit einem Heizelement (15) versehenen Heiz-Kühl-Block (12) aufweist, der mit der flexiblen Lippe (6) eine kraftschlüssige Verbindung (13,29-33) ausbildet und dessen Längenänderungen die Stellung der flexiblen Lippe (6) steuern und/oder regeln,
dadurch gekennzeichnet,
daß der Düsenkörper (3) der verstellbaren Lippe (6) zwei glatte Bohrungen (8,9) für jeweils einen Gewindebolzen (10,11) aufweist, zwischen dem Düsenkörper (3) der verstellbaren Lippe (6) und dem Heiz-Kühl-Block (12) ein Anschlagstück (23) angeordnet ist, beide Gewindebolzen (10,11) durch das Anschlagstück (23) hindurchgeführt sind, der eine Gewindebolzen (10) kraftschlüssig mit dem Anschlagstück (23) verbunden ist und gegen den Heiz-Kühl-Block (12) ansteht und der andere Gewindebolzen (11) sich mit seinem Bolzenkopf am Düsenkörper (3) abstützt und kraftschlüssig mit dem Heiz-Kühl-Block (12) verbunden ist.

2. Breitschlitzdüse (1) nach Anspruch 1,
dadurch gekennzeichnet,
daß der Heiz-Kühl-Block (12) über ein Druck- und Zugelement (29) kraftschlüssig mit der flexiblen Lippe (6) verbunden ist.

3. Breitschlitzdüse (1) nach Anspruch 1 oder 2,
dadurch gekennzeichnet,
daß das Druck- und Zugelement (29) mit dem Heiz-Kühl-Block (12) über eine Keilfläche (31) spielfrei verbunden ist und die flexible Lippe (6) zwischen ihnen eingespannt ist.

4. Breitschlitzdüse (1) nach Anspruch 1, 2 oder 3,

dadurch gekennzeichnet,
daß der Heiz-Kühl-Block (12) für den anderen Gewindebolzen (11) eine glatte Bohrung (26) hat und diese Bohrung (26) eine senkrecht zu ihrer Achse verlaufende Querbohrung (27) achsenschneidend durchstößt, wobei in letzterer ein Drehkörper (28) mit einer Gewindebohrung angeordnet ist, die mit dem anderen Gewindebolzen (11) eine kraftschlüssige Verbindung ausbildet.

## Claims

1. Wide slot die (1) for the extrusion of thermoplastics, having two die bodies (2, 3) delimiting at least one die gap, at least one die body (3) having a flexible lip (6) and at least one heating/cooling block (12) which is provided with a heating element (15) and which forms a frictional connection (13, 29-33) with the flexible lip (6) and the changes in length of which control and/or regulate the position of the flexible lip (6), characterized in that the die body (3) of the adjustable lip (6) has two smooth bores (8, 9) for a respective threaded pin (10, 11), in that there is arranged between the die body (3) of the adjustable lip (6) and the heating/cooling block (12) a stop piece (23), in that both threaded pins (10, 11) are guided through the stop piece (23), in that one threaded pin (10) is connected frictionally with the stop piece (23) and bears against the heating/cooling block (12), and in that the other threaded pin (11) is supported on the die body (3) by means of its pin head and is connected frictionally with the heating/cooling block (12).

2. Wide slot die (1) according to Claim 1, characterized in that the heating/cooling block (12) is connected frictionally to the flexible lip (6) by way of a pressure and tension element (29).

3. Wide slot die (1) according to Claim 1 or 2, characterized in that the pressure and tension element (29) is connected without play to the heating/cooling block (12) by way of a wedge surface (31) and the flexible lip (6) is clamped between them.

4. Wide slot die (1) according to Claim 1, 2 or 3, characterized in that the heating/cooling block (12) has for the other threaded pin (11) a smooth bore (26) and this bore (26) passes, in axis-intersecting manner, through a transverse bore (27) running perpendicular to the axis of said bore (26), there being arranged in said transverse bore (27) a rotary body (28) having a threaded bore which forms a frictional connection with the other threaded pin (11).

## Revendications

1. Filière plate (1) pour l'extrusion de matières thermoplastiques, équipée de deux corps de filière (2, 3) délimitant au moins une fente de filière, dans laquelle au moins un corps de filière (3) comporte une lèvre flexible (6) et au moins un bloc de chauffage-refroidissement (12) muni d'un élément chauffant (15), qui forme avec la lèvre flexible (6) une liaison par verrouillage (13, 29-33) et dont les modifications de longueur commandent et/ou régulent la position de la lèvre flexible (6), caractérisée en ce que le corps de filière (3) de la lèvre réglable (6) présente deux alésages lisses (8, 9) chacun pour un boulon fileté (10, 11), un élément de butée (23) étant disposé entre le corps de filière (3) de la lèvre réglable (6) et le bloc de chauffage-refroidissement (12), les deux boulons filetés (10, 11) traversant l'élément de butée (23), le premier boulon fileté (10) étant réuni par verrouillage à l'élément de butée (23) et s'appliquant contre le bloc de chauffage-refroidissement (12) et l'autre boulon fileté (11) s'appuyant avec sa tête contre le corps de filière (3) et étant réuni par verrouillage au bloc de chauffage-refroidissement (12).

2. Filière plate (1) selon la revendication 1, caractérisée en ce que le bloc de chauffage-refroidissement (12) est réuni à verrouillage à la lèvre flexible (6) par l'intermédiaire d'un élément de pression et de traction (29).

3. Filière plate (1) selon la revendication 1 ou 2, caractérisée en ce que l'élément de pression et de traction (29) est réuni sans jeu au bloc de chauffage-refroidissement (12) par l'intermédiaire d'une cale (31) et la lèvre flexible (6) est encastrée entre eux.

4. Filière plate (1) selon la revendication 1, 2 ou 3, caractérisée en ce que le bloc de chauffage-refroidissement (12) pour l'autre boulon fileté (11) possède un alésage lisse (26) et cet alésage (22) traverse en coupe axiale un alésage transversal (27) s'étendant perpendiculairement à son axe, un corps rotatif (28) avec un alésage fileté étant disposé dans ce dernier, qui forme avec l'autre boulon fileté (11) une liaison à verrouillage.